# EUROPEAN PATENT APPLICATION

(11) **EP 3 876 413 A1**
(43) Date of publication of application: **08.09.2021**
(21) Application number: 20161470.8
(22) Date of filing: 06.03.2020
(51) Int. Cl.: H02M 7/797, B60L 9/24, B60L 50/53, H02J 9/06, H02M 3/155

(54) **MULTIUSE OF PHASE LEGS IN A POWER SUPPLY SYSTEM FOR A TRACTION UNIT**

(71) Applicant: ABB Schweiz AG, 5400 Baden (CH)
(72) Inventor: Wicki, Stefan, 5702 Niederlenz (CH); Mariappan, Senthilnathan, 5400 Baden (CH); Meyer, Francesca, 8006 Zurich (CH); Andersson, Caroline, 8032 Zurich (CH); Knapp, Gerold, 5420 Ehrendingen (CH); Stemmler, Christoph, 5415 Nussbaumen (CH)
(74) Representative: Qip Patentanwälte Dr. Kuehn & Partner mbB

(57) **Abstract**

The invention relates to power supply system (102) for a traction unit (100), the traction unit (100) having a transformer (104) for providing a transformer AC voltage from an electrical grid (107, 160) and a battery (110) for providing a battery DC voltage, the power supply system (102) comprising: a DC link (112) for providing a DC link voltage; a first converter (114) and a second converter (116) for converting at least one of the transformer AC voltage and the battery DC voltage into the DC link voltage, wherein each of the first converter (114) and the second converter (116) comprises at least two half bridges (200, 202) and wherein each of the half bridges (200, 202) is connected in parallel to the DC link (112); a first transformer terminal (122) and a second transformer terminal (126) for connecting each pole (120, 124) of a secondary coil (108) of the transformer (104) to a midpoint (208) of at least one of the half bridges (200, 202); a first battery terminal (130) for connecting a first pole (158) of the battery (110) to a midpoint (208) of at least one of the half bridges (200, 202); a second battery terminal (133) for connecting a second pole (132) of the battery (110) to the DC link (112); a switch (134) switchable between a first closed state and a second closed state, wherein the switch (134) connects a midpoint (208) of one of the half bridges (200, 202) either to one of the first transformer terminal (122) and the second transformer terminal (126) in the first closed state or to the first battery terminal (130) in the second closed state.

## Description

### FIELD OF THE INVENTION

The invention relates to a power supply system for a traction unit. Furthermore, the invention relates to a method for operating such a power supply system.

### BACKGROUND OF THE INVENTION

Energy storage in mass transit application becomes more and more widespread due to the increased operational flexibility they offer, the need to de-carbonize transportation, the possibility to enter non-electrified terrain, or the need to buffer energy during recuperative braking.

There are many different systems for supplying power to traction chains, e.g. via a contact line or a diesel generator. Therefore, traction chains may include a so-called series hybrid system. These systems can cover itineraries that are supplied with different power sources.

A series hybrid system may comprise one or more batteries directly connected to a DC link of a conversion circuit, thereby limiting a DC link voltage to an operating voltage of the battery. Alternatively, the battery may be connected to the DC link via a chopper.

JP 2014-064397 A shows an electric power source system comprising a main conversion circuit connected with a secondary winding of a main transformer for supplying a driving electric power to a main electric motor. A DC link portion of the main conversion circuit is connected through a high-speed circuit breaker with a battery.

JP 2014-064398 A shows an electric power source system with a battery connected through a high-speed circuit breaker and a chopper with a DC link portion of a main conversion circuit for feeding drive power to a main motor.

### DESCRIPTION OF THE INVENTION

It is an objective of the invention to improve the control of power flows between different agents in a traction unit, such as, for example, an electric motor, a contact line, auxiliaries, a diesel generator, a fuel cell or a battery.

This objective is achieved by the subject-matter of the independent claims. Further exemplary embodiments are evident from the dependent claims and the following description.

A first aspect of the invention relates to a power supply system for a traction unit, the traction unit having a transformer for providing a transformer AC voltage from an electrical grid and a battery for providing a battery DC voltage. The power supply system comprises: a DC link for providing a DC link voltage; a first converter and a second converter for converting at least one of the transformer AC voltage and the battery DC voltage into the DC link voltage, wherein each of the first converter and the second converter comprises at least two half bridges and wherein each of the half bridges is connected in parallel to the DC link; a first transformer terminal and a second transformer terminal for connecting each pole of a secondary coil of the transformer to a midpoint of at least one of the half bridges; a first battery terminal for connecting a first pole of the battery to a midpoint of at least one of the half bridges; a second battery terminal for connecting a second pole of the battery to the DC link; a switch switchable between a first closed state and a second closed state, wherein the switch connects a midpoint of one of the half bridges either to one of the first transformer terminal and the second transformer terminal in the first closed state or to the first battery terminal in the second closed state.

A traction unit may be a railway vehicle such as, for example, a tramway, a metro, a monorail, a (high-speed) train, an electric multiple unit (EMU), a diesel-electric multiple unit (DMU), a fuel cell powered multiple unit (FMU), a locomotive, a trolleybus, etc.

A primary coil of the transformer may, for example, be connected to a contact line or a stationary power supply in a depot. The transformer may be installed in a driven and/or non-driven wagon of the traction unit.

Each of the first converter and the second converter may be a four-quadrant converter. For example, the first converter and the second converter may be operated in an AC-DC and/or a DC-DC converting mode. Power conversion with the first converter and the second converter may be bidirectional.

Each of the half bridges, which may also be called phase legs, may comprise two series-connected power switches such as, for example, MOSFETs or IGBTs. However, the first converter and the second converter may also function as passive rectifiers.

The DC link may be connected to at least one further converter of the power supply system, such as, for example, a motor or propulsion converter, a braking chopper, a battery charger, a voltage limiting unit, an auxiliary converter, etc.

The switch may be a break-before-make changeover switch. For example, the switch may also be switchable into a stable open state between the first closed state and the second closed state.

The power supply system may optionally comprise an interrupter for disconnecting the DC link from the second battery terminal, for example when the switch is switched into the first closed state.

The battery may also be seen as a fuel cell adapted for converting chemical energy of a fuel, such as hydrogen, and an oxidizing agent, such as oxygen, into electricity.

Such a power supply system has the advantage that the DC link voltage is not limited to the battery DC voltage. Furthermore, the first converter and the second converter may be operated in such a way that no additional chopper is required for feeding the DC link with power from the battery and vice versa, which reduces production costs and makes the power supply system technically less complex compared to a system with such a chopper.

Another advantage is that the power supply system can be implemented in different types of traction units without significant changes in hardware or motor performance. In other words, the available phase legs of the converters may easily be reconfigured and controlled for flexibly directing power flows between different agents in the traction unit. For example, different operating modes of the traction unit may be realized without the use of different hardware configurations for each of the operating modes. Such operating modes may include a traditional supply via a contact line or a diesel generator, a pure battery mode, a mixed mode or charging of the battery in a depot or via auxiliaries.

Also, the power supply system may be combined with different primary sources such as a diesel generator or a fuel cell. Furthermore, it is possible to add multiple batteries into the power supply system.

The power supply system may for example be used with at least one of the following hybrid traction chains:
- electric multiple unit, i.e. series hybrid system in contact line powered vehicles (contact line + energy storage system);
- diesel-electric multiple unit, i.e. series hybrid system in diesel-electric vehicles (diesel generator + energy storage system);
- fuel cell powered multiple unit, i.e. series hybrid system in fuel cell vehicles (fuel cell + energy storage system);
- a combination of at least two of the above traction chains, i.e. series hybrid system in contact line powered vehicles with diesel generator or fuel cell (diesel generator or fuel cell + contact line + energy storage system).

By re-configuring the existing phase legs based on an application at hand, the following operating modes according to IEC 62864-1 may be realized:
I. Supplementary charging during motoring
II. Pure power source
III. Boosting
IV. Zero emission/contact line free
V. Energy storage system to traction and grid
VI. Power source charging energy storage system
VII. Energy storage system to grid mode
VIII. Energy storage system and regenerative braking to grid
IX. Pure regenerative braking
X. Regenerative braking to energy storage system and power source
XI. Regenerative braking to energy storage system only
XII. Supplementary charging during braking
XIII. Idling
XIV. Zero emission coasting
XV. Rheostatic braking with energy storage system charging and source feedback
XVI. Rheostatic braking with source feedback
XVII. Rheostatic braking with energy storage system charging
XVIII. Pure rheostatic braking

According to an embodiment of the invention, the switch is further switchable into a stable open state. In the open state of the switch, both a current flow between the DC link and the transformer and a current flow between the DC link and the battery may be interrupted.

According to an embodiment of the invention, the power supply system comprises at least one further terminal for connecting a pole of a further electrical energy source to a midpoint of at least one of the half bridges and at least one further switch switchable between a first closed state and a second closed state. The at least one further switch connects a midpoint of another of the half bridges either to one of the first transformer terminal and the second transformer terminal in the first closed state or to the at least one further terminal in the second closed state.

For example, the further electrical energy source may be a further battery or a generator. The at least one further switch may also be a break-before-make changeover switch. The switch and the further switch may be mechanically coupled to each other so that both switches are always switched into the same state.

Thus, one or more additional electrical energy sources may be added into the power supply system by re-using the existing phase legs of the first converter and the second converter. In other words, different operating modes can be supported without drawbacks such as the need for an additional chopper or the limitation of the DC link voltage.

According to an embodiment of the invention, the switch connects a midpoint of a first half bridge of the first converter to the first transformer terminal in the first closed state, wherein the at least one further switch connects a midpoint of a second half bridge of the first converter to the second transformer terminal in the first closed state. At least one of the first transformer terminal and the second transformer terminal is further connected to a midpoint of one of the half bridges of the second converter. It may be that the first transformer terminal and the second transformer terminal are both connected to the second converter independent of a respective state of the switch and the further switch.

According to an embodiment of the invention, the power supply system further comprises a first terminal, a second terminal and a third terminal for connecting poles of at least one further electrical energy source to a midpoint of at least one of the half bridges and a first switch, a second switch, a third switch and a forth switch, each of which being switchable between a first closed state and a second closed state. The first switch connects a midpoint of a first half bridge of the first converter either to the first transformer terminal in the first closed state or to the first terminal in the second closed state. The second switch connects a midpoint of a second half bridge of the first converter either to the second transformer terminal in the first closed state or to the second terminal in the second closed state. The third switch connects a midpoint of a first half bridge of the second converter either to the first transformer terminal in the first closed state or to the third terminal in the second closed state. The forth switch connects a midpoint of a second half bridge of the second converter either to the second transformer terminal in the first closed state or to the first battery terminal in the second closed state. Each of the four switches may be a break-before-make changeover switch.

For example, the first terminal, the second terminal and the third terminal may each be connected to a pole of three-phase generator. Alternatively, at least one of the first terminal, the second terminal and the third terminal may be connected to a pole of a further battery, whereas a second pole of the further battery may be connected to the DC link. With this embodiment, the power supply system may be connected to a variety of different electrical AC or DC energy sources.

According to an embodiment of the invention, at least one of the first transformer terminal and the second transformer terminal is connectable with one switch to a midpoint of one of the half bridges of the first converter and with another switch to a midpoint of one of the half bridges of the second converter.

According to an embodiment of the invention, the power supply system may further comprise an interrupter for disconnecting the DC link from the second battery terminal.

A second aspect of the invention relates to a method for operating a power supply system as described above and below.

According to an embodiment of the invention, the method comprises: receiving, at a control unit of the power supply system, an operating information indicating an operating mode of the power supply system.

According to an embodiment of the invention, the method comprises: when the operating information indicates a transformer operating mode, switching the switch into the first closed state and controlling a current flow between the transformer and the DC link with at least one of the first converter and the second converter. In the transformer operating mode, solely the transformer may be connected to the midpoints. Power conversion between the transformer and the DC link may be bidirectional.

According to an embodiment of the invention, the method comprises: when the operating information indicates a battery operating mode, switching the switch into the second closed state and controlling a current flow between the battery and the DC link with at least one of the first converter and the second converter. In the battery operating mode, solely one or more batteries may be connected to the midpoints and the DC link. Power conversion between the battery or the batteries and the DC link may be bidirectional.

According to an embodiment of the invention, the power supply system further comprises at least one further terminal connected to a pole of a further electrical energy source, at least one further switch switchable between a first closed state and a second closed state, wherein the at least one further switch connects a midpoint of another of the half bridges either to one of the first transformer terminal and the second transformer terminal in the first closed state or to the at least one further terminal in the second closed state.

The method further comprises: when the operating information indicates an operating mode including at least the further electrical energy source, switching the at least one further switch into the second closed state and controlling a current flow between the further electrical energy source and the DC link with at least one of the first converter and the second converter. Power conversion between the further electrical energy source and the DC link may be bidirectional.

According to an embodiment of the invention, the method further comprises: when the operating information indicates an operating mode excluding the further electrical energy source, switching the at least one further switch either into the first closed state or into an open state.

According to an embodiment of the invention, the method further comprises: when the operating information indicates an operating mode including only the further electrical energy source, switching the switch into an open state, switching the at least one further switch into the second closed state and controlling a current flow between the further electrical energy source and the DC link with at least one of the first converter and the second converter.

According to an embodiment of the invention, the method further comprises: when the operating information indicates an operating mode including the transformer and the battery, switching the switch into the second closed state, switching the at least one further switch into the first closed state and controlling a current flow between the transformer and the DC link and a current flow between the battery and the DC link with at least one of the first converter and the second converter. In this operating mode, solely the transformer and one or more batteries may be connected to the midpoints. Power conversion between the transformer and the DC link and/or between the battery or the batteries and the DC link may be bidirectional.

According to an embodiment of the invention, the method further comprises: when the operating information indicates an operating mode including the further electrical energy source and the battery, switching the switch and the at least one further switch into the second closed state and controlling a current flow between the further electrical energy source and the DC link and a current flow between the battery and the DC link with at least one of the first converter and the second converter. In this operating mode, solely the further electrical energy source and the battery may be connected to the midpoints. Power conversion between the further electrical energy source and the DC link and/or between the battery and the DC link may be bidirectional.

According to an embodiment of the invention, the method further comprises: when the operating information indicates the transformer operating mode, switching the switch and the at least one further switch into the first closed state and controlling a current flow between the transformer and the DC link with at least one of the first converter and the second converter.

For example, the DC link may be disconnected with an interrupter from the second battery terminal when the operating information indicates the transformer operating mode. Additionally or alternatively, the DC link may be disconnected with the interrupter from the second battery terminal when the operating information indicates an operating mode including only the further electrical energy source.

According to an embodiment of the invention, the method further comprises: when the operating information indicates the battery operating mode, switching the switch into the second closed state, switching the at least one further switch either into the second closed state when the further electrical energy source is a further battery or into an open state when the further electrical energy source is a generator and controlling a current flow between the DC link and at least one of the battery and the further battery with at least one of the first converter and the second converter.

According to an embodiment of the invention, the current flow between the battery and the DC link is controlled in such a way that the battery draws power from the DC link.

According to an embodiment of the invention, the current flow between the further electrical energy source and the DC link is controlled in such a way that the further electrical energy source draws power from the DC link.

The method may be performed by a control unit of the power supply system. For example, the control unit may comprise a processor with a memory adapted for running a computer program, which, when being run, performs the method as described above and below.

It has to be understood that features of the method as described above and below may be features of the power supply system as described above and below, and vice versa.

These and other aspects of the invention will be apparent from and elucidated with reference to the embodiments described hereinafter.

### BRIEF DESCRIPTION OF THE DRAWINGS

The subject-matter of the invention will be explained in more detail in the following text with reference to exemplary embodiments which are illustrated in the attached drawings.
Fig. 1 schematically shows a traction unit with power supply systems according to an embodiment of the invention.
Fig. 2 shows a first converter and a second converter of Fig. 1 in more detail.
Fig. 3 and Fig. 4 show a power supply system of Fig. 1 in a transformer operating mode.
Fig. 5 and Fig. 6 show a power supply system of Fig. 1 in a battery operating mode.
Fig. 7 shows a traction unit with power supply systems according to a further embodiment of the invention.
Fig. 8 and Fig. 9 show a power supply system of Fig. 7 in a generator operating mode.
Fig. 10 and Fig. 11 show a power supply system of Fig. 7 in a battery operating mode.
Fig. 12 to Fig. 15 show a power supply system of Fig. 7 in a first combined operating mode.
Fig. 16 to Fig. 19 show a power supply system of Fig. 7 in a second combined operating mode.
Fig. 20 and Fig. 21 show a further power supply system of Fig. 7 in a combined operating mode.
Fig. 22 shows a further power supply system of Fig. 1 in a battery operating mode.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

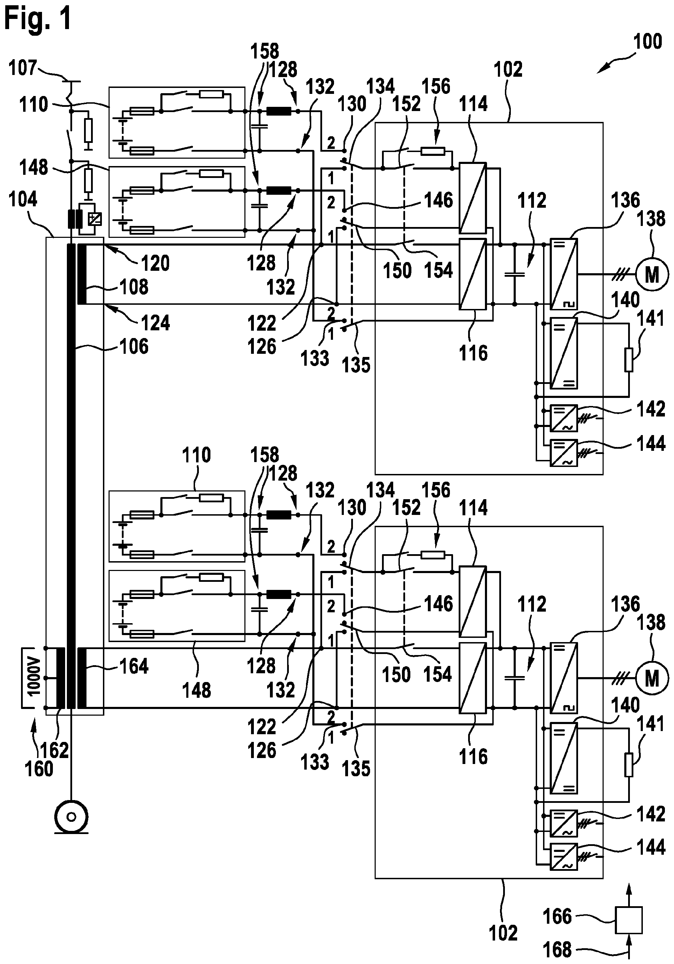

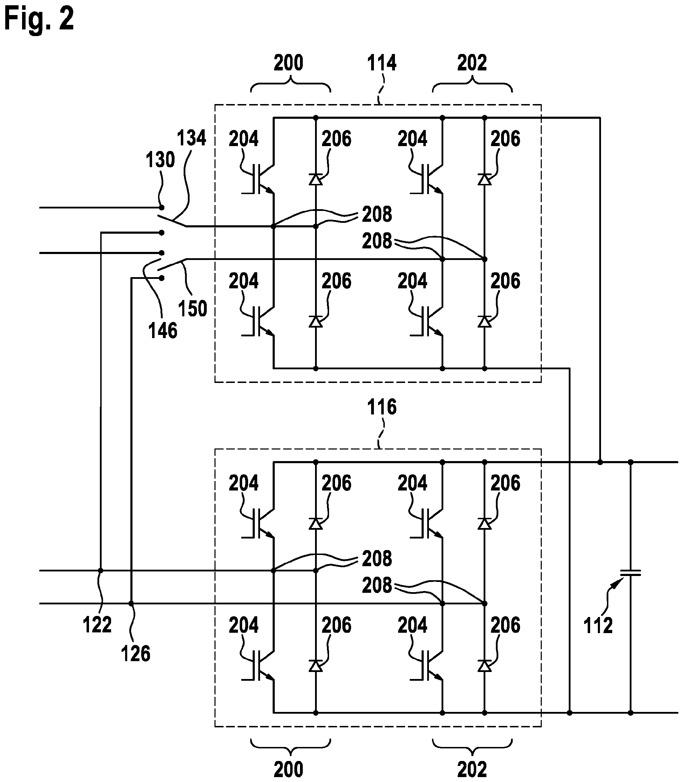

Fig. 1 shows a traction unit 100 with a power supply system 102, which may also be called traction converter. The traction unit 100 comprises a transformer 104 with a primary coil 106 connected to an electrical grid, e.g. a contact line 107, and a secondary coil 108 for providing a transformer AC voltage. Furthermore, the traction unit 100 comprises a battery 110 for providing a battery DC voltage. The power supply system 102 comprises a DC link 112 for providing a DC link voltage, a first converter 114 and a second converter 116. Each of the converters 114, 116 is a four-quadrant converter, as shown in more detail in Fig. 2. The DC link 112 is connected to a voltage output of the two converters 114, 116. The secondary coil 108 is connected at its first pole 120 to a first transformer terminal 122 and at its second pole 124 to a second transformer terminal 126 of the power supply system 102. The battery 110 is connected at its first pole 128 to a first battery terminal 130 and at its second pole 132 to a second battery terminal 133. The second battery terminal 133 is connected to a pole of the DC link 112.

In order to operate the power supply system 102 in at least two different operating modes, a voltage input of at least one of the converters 114, 116 may be connected with at least one switch 134, which is switchable between a first closed state and a second closed state, either to at least one of the transformer terminals 122, 126 when the switch 134 is switched into the first closed state or to the first battery terminal 128 when the switch 134 is switched into the second closed state. The switch 134 may also be switchable into a stable open state, as shown in Fig. 1.

Optionally, the second battery terminal 133 may be disconnected with an interrupter 135 from the DC link 112.

The DC link 112 is further connected to a voltage input of at least one further converter, for example a motor converter 136 connected to a motor 138 of the traction unit 100, a braking chopper 140 connected to a braking resistor 141, a first auxiliary converter 142 and a second auxiliary converter 144.

Additionally, the power supply system 102 may comprise a further terminal 146 for connecting a further electrical energy source to the voltage input. In this example, the further terminal 146 is connected to a first pole 128 of a further battery 148, whereas a second pole 132 of the further battery 148 is connected to the second battery terminal 133. With a further switch 150, which is also switchable between a first closed state and a second closed state, the voltage input of at least one of the converters 114, 116 may be connected either to at least one of the transformer terminals 122, 126 when the further switch 150 is switched into the first closed state or to the further terminal 146 when the further switch 150 is switched into the second closed state.

For example, the switch 134 may be adapted for connecting either the first battery terminal 130 or the first transformer terminal 122 to the voltage input of the first converter 114. Similarly, the further switch 150 may be adapted for connecting either the further terminal 146 or the second transformer terminal 126 to the voltage input of the first converter 114.

The first transformer terminal 122 and the second transformer terminal 126 may be connected to the voltage input of the second converter 116.

The switch 134 and the further switch 150 may be mechanically coupled to each other so that both switches 134, 150 are always switched into the same state. Furthermore, the interrupter 135 may be mechanically coupled to at least one of the switches 134, 150 so that the interrupter 135 is switched into an open state when the switches 134, 150 are switched into the first closed state and switched into a closed state when the switches 134, 150 are switched into the second closed state.

For switching on and off, the power supply system 102 may comprise a first main switch 152 connected to the voltage input of the first converter 114 and a second main switch 154 connected to the voltage input of the second converter 116. The main switches 152, 154 may be mechanically coupled to each other. Furthermore, at least one of the main switches 152, 154 may be combined with a pre-charge unit 156 for limiting an inrush current during a power up procedure.

Each of the batteries 110, 148 may comprise an LC filter 158.

In particular, the following power flows may be realized with the power supply system 102 as shown in Fig. 1:
- between the transformer 104 as a primary power source and the DC link 112 (bidirectional);
- between the battery 110, 148 and the DC link 112 (bidirectional);
- between the DC link 112 and traction equipment (bidirectional);
- between the DC link 112 and the brake resistor 141 (unidirectional);
- between the DC link 112 and auxiliaries (bidirectional when including feed-in via auxiliaries).

The traction unit 100 may have more than one power supply system 102. For example, the traction unit 100 may have one power supply system 102 for drawing power from the contact line 107 and a further power supply system 102 for drawing power from a further power supply 160, e.g. a UIC 1000 V shop floor supply (depot supply), which may be connected to a further primary coil 162 of the transformer 104. The further primary coil 162 may be coupled to a further secondary coil 164, which may be connected to the transformer terminals 122, 126 of the further power supply system 102.

The converters 114, 116 of each of the power supply systems 102 may be controlled with a control unit 166 based on an operating information 168 indicating an operating mode as described above and below.

The advantage of such a power supply system 102 is that existing traction chain configurations can be upgraded with one or more energy storage systems, i.e. batteries. An intelligent control of the converters 114, 116 may open up a variety of operating options. Thereby, a power flow in the traction chain can be optimized when compared to traditional multi-unit systems. Furthermore, no battery chopper is required and the DC link voltage is not limited to a battery operating voltage.

Fig. 1 shows an example with contact line supply and one energy storage system per motor to form a series hybrid system with re-configurable phase legs.

Depending on the indicated positions 1, 2 of the switches 134, 150, different power sources and/or sinks may be connected to the DC link 112 via the converters 114, 116. The flexible control of the converters 114, 116 ensures that always a required phase leg is closed to support a current flow at hand (depending on a direction of the power flow and depending on whether the traction unit is accelerating or decelerating).

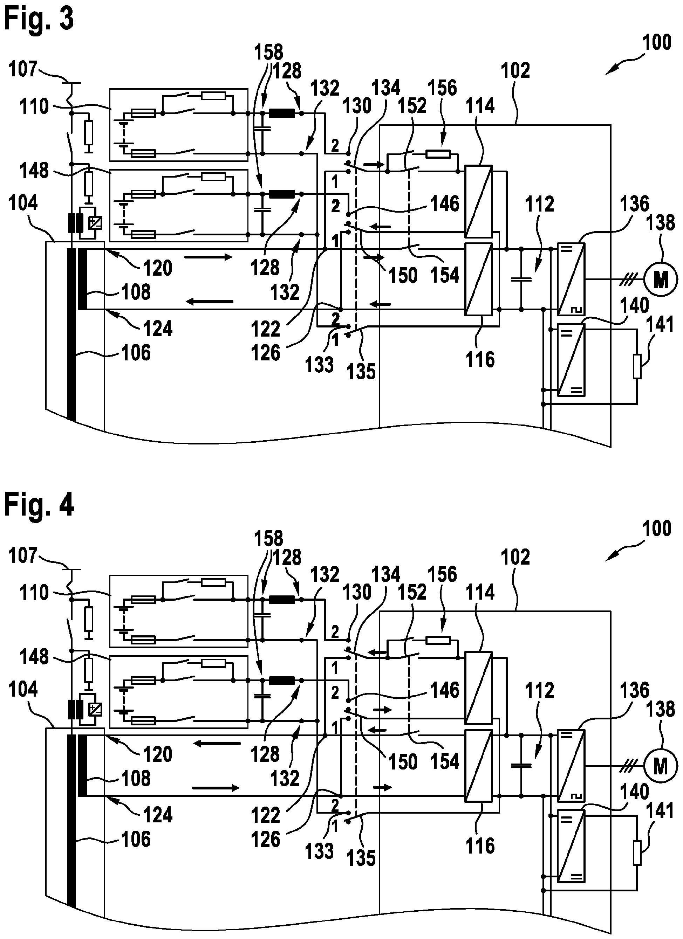

For example, for operating the power supply system 102 in a transformer operating mode, e.g. a pure power source mode according to IEC 62864-1, the switches 134, 150 and the interrupter 135 may each be switched into position 1, which corresponds to the first closed state of the switches 134, 150 and the open state of the interrupter 135. This is shown in Fig. 3 and Fig. 4. Active current paths are indicated by arrows. The transformer AC voltage may be converted with the two converters 114, 116 through active or passive rectification. The direction of the power flow depends on which of the phase legs in the converters 114, 116 are closed.

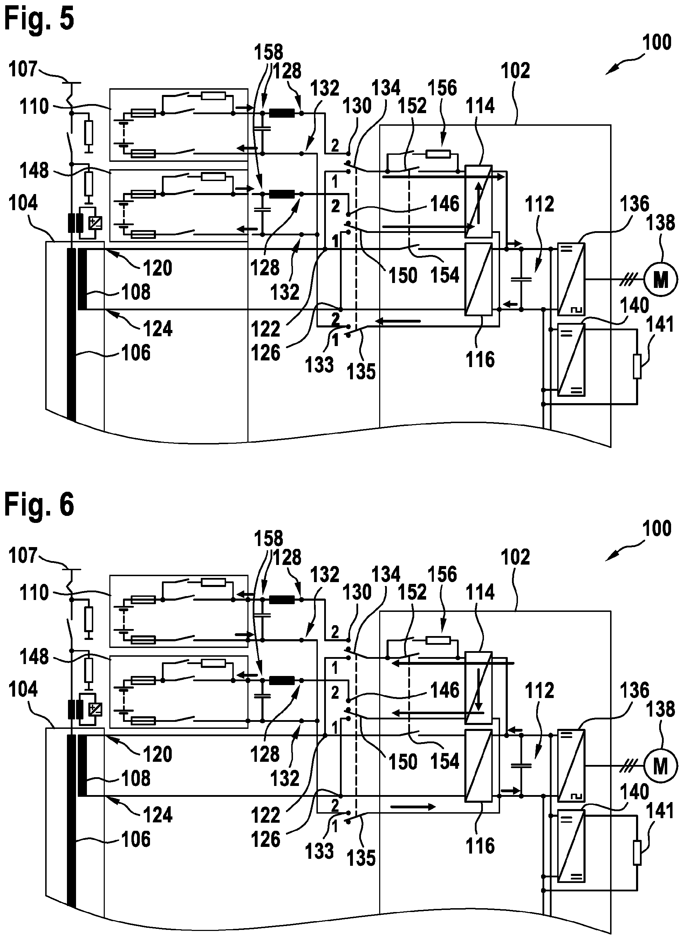

Alternatively, the power supply system 102 may be operated in a battery operating mode without rectification, e.g. a zero emission/contact line free mode according to IEC 62864-1. To enable the battery operating mode, the switches 134, 150 and the interrupter 135 are each switched into position 2, which corresponds to the second closed state of the switches 134, 150 and the closed state of the interrupter 135. This is shown in Fig. 5 and Fig. 6. Active current paths are indicated by arrows. Power flow may be bidirectional.

For example, the first converter 114 may be controlled in such a way that the batteries 110, 148 feed the DC link 112, as shown in Fig. 5.

Alternatively, the first converter 114 may be controlled in such a way that the DC link 112 feeds the batteries 110, 148, as shown o Fig. 6.

Fig. 2 shows the converters 114, 116 in more detail. Each of the converters 114, 116 comprises a first half bridge 200 and a second half bridge 202, which may also be called phase legs. Each of the half bridges 200, 202 is connected in parallel to the DC link 112 and may comprise two series connected power switches 204, such as MOSFETs or IGBTs, and/or two series connected diodes 206, which are interconnected at a midpoint 208.

For example, a midpoint 208 of a first half bridge 200 of the first converter 114 may be connected with the first switch 134 either to the first battery terminal 130 or to the first transformer terminal 122, whereas a midpoint 208 of a second half bridge 202 of the first converter 114 may be connected with the further switch 150 either to the further terminal 146 or to the second transformer terminal 126. Furthermore, the first transformer terminal 122 may be connected to a midpoint 208 of a first half bridge 200 of the second converter 116, whereas a midpoint 208 of a second half bridge 202 of the second converter 116 may be connected to the second transformer terminal 126.

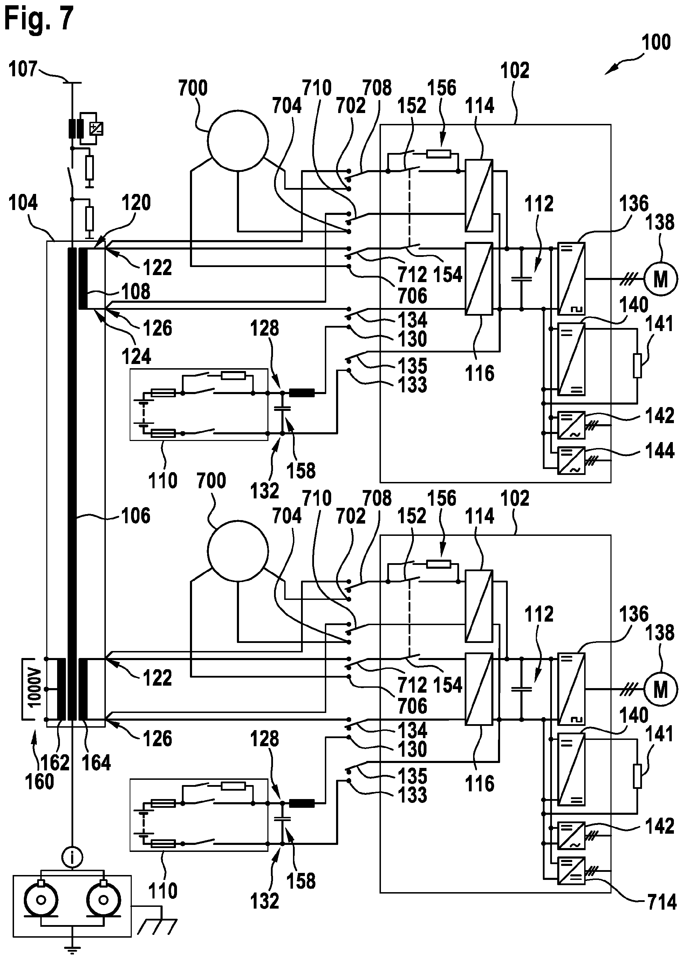

Fig. 7 shows a traction unit 100 in the form of a DMU system powered by at least one of a three-phase diesel generator 700, the transformer 104 and the battery 110.

In addition to the first battery terminal 130, the power supply system 102 may comprise at least a first terminal 702, a second terminal 704 and a third terminal 706. Each of the three terminals 702, 704, 706 may be connected to a phase of the generator 700.

In addition to the switch 134, the power supply system 102 may further comprise at least a first switch 708, a second switch 710 and a third switch 712, which are each switchable between a first closed state and a second closed state.

Optionally, all of the switches 134, 708, 710, 712 may be switchable into an open state, as shown exemplarily in Fig. 7.

In this example, the switch 134 connects the midpoint 208 of the second half bridge 202 of the second converter 116 either to the second transformer terminal 126 in the first closed state or to the first battery terminal 130 in the second closed state. The first switch 708 connects the midpoint 208 of the first half bridge 200 of the first converter 114 either to the first transformer terminal 122 in the first closed state or to the first terminal 702 in the second closed state. The second switch 710 connects the midpoint 208 of the second half bridge 202 of the first converter 114 either to the second transformer terminal 126 in the first closed state or to the second terminal 704 in the second closed state. The third switch 712 connects the midpoint 208 of the first half bridge 200 of the second converter 116 either to the first transformer terminal 122 in the first closed state or to the third terminal 706 in the second closed state.

Similar to Fig. 1, the traction unit 100 may comprise two such power supply systems 102, each of which connected to one of the secondary coils 108, 164 of the transformer 104, to a battery 110 and to a generator 700.

Instead of the second auxiliary converter 144, the further power supply system 102, which is connected to the further secondary coil 164, may have a further chopper 714.

It is possible that at least one of the three terminals 702, 704, 706 is connected to a first battery pole 128 of a further battery 148 rather than to a phase of the generator 700, wherein a second battery pole 132 of the further battery 148 may be connected to the second battery terminal 133.

For example, each of the terminals 702, 704, 706 of the further power supply system 102 may be connected to a further battery 148. In this case, the traction unit 100 may comprise one generator 700, the battery 100 and three further batteries 148 as further electrical energy sources in addition to the transformer 104. However, various other configurations are possible.

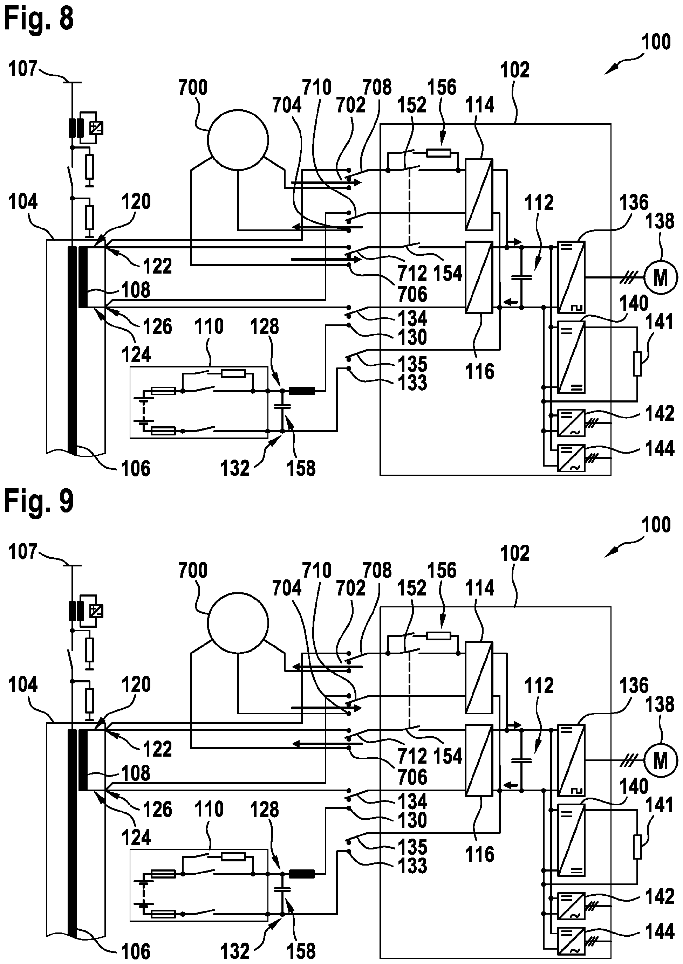

For example, the power supply system 102 may be operated in a generator operating mode, in which the traction unit 100 is only propelled with power from the generator 700. This is shown in Fig. 8 and Fig. 9. In the generator operating mode, the first switch 708, the second switch 710 and the third switch 712 are each switched into the second closed state. Additionally, the switch 134 may be switched into the open state. Current flows are indicated by arrows. Power flow may be unidirectional. Rectification may be passive or active.

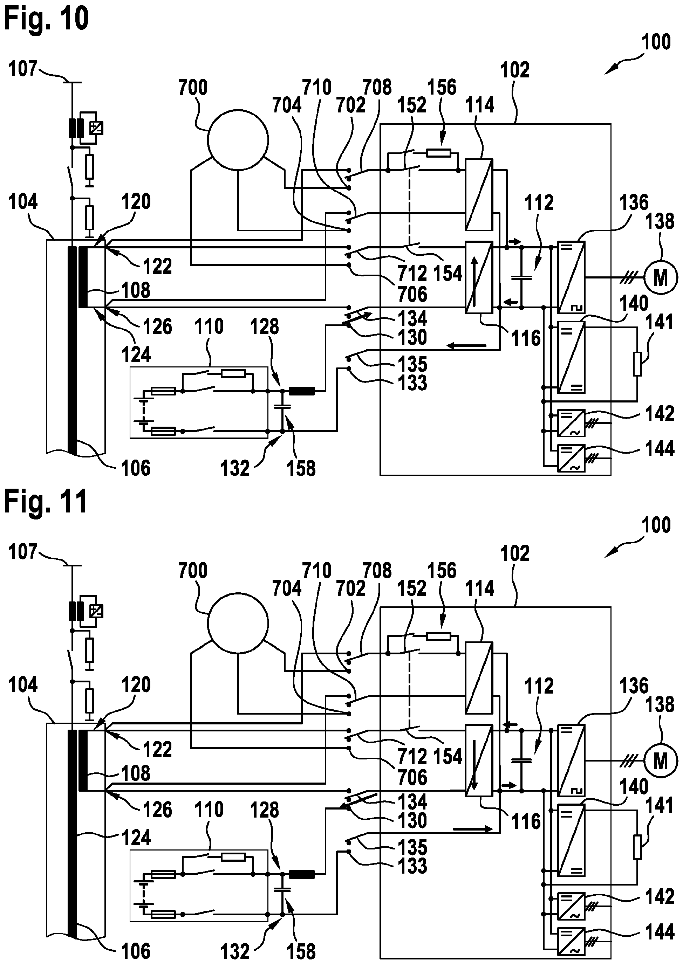

Alternatively, the power supply system 102 may be operated in a battery operating mode without rectification, e.g. for zero emission or regenerative braking. This is shown in Fig. 10 and Fig. 11. In the battery operating mode, the switch 134 is switched into the second closed state, wherein the first switch 708, the second switch 710 and the third switch 712 are each switched into the open state. Additionally, the interrupter 135 is switched into the closed state. Current flows are indicated by arrows. Power flow may be bidirectional.

For example, the second converter 116 may be controlled in such a way that the battery 110 feeds the DC link 112, as shown in Fig. 10.

Alternatively, the second converter 116 may be controlled in such a way that the DC link 112 feeds the battery 110, as shown in Fig. 11.

Furthermore, with the correct configuration of the phase legs, the battery 110 may be combined with either the contact line 107 or the generator 700 to be charged or discharged.

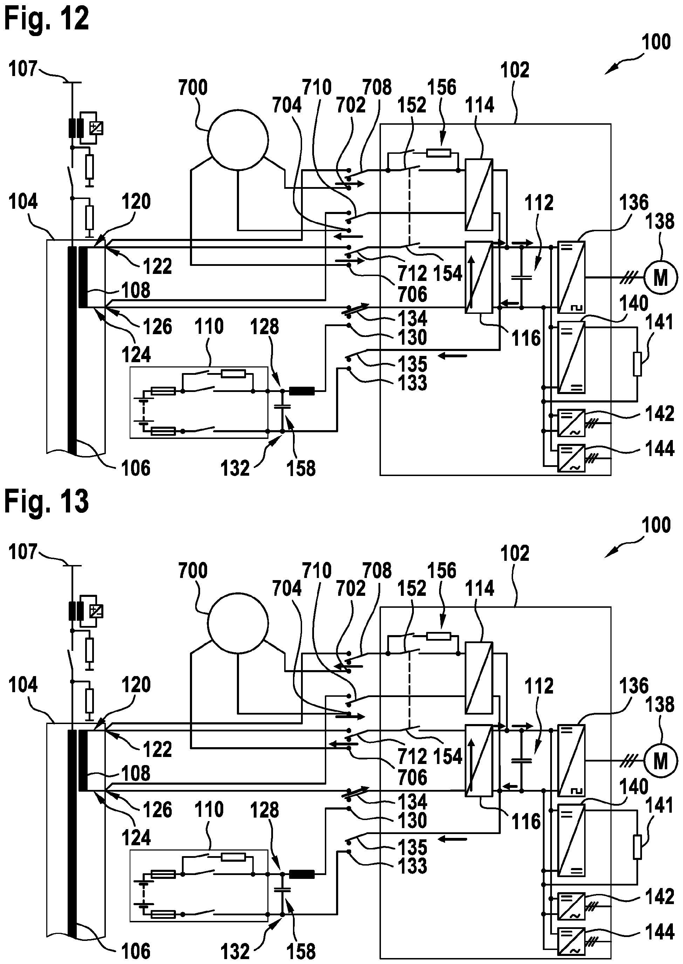

An example for a first combined operating mode of the power supply system 102 is shown in Fig. 12 to Fig. 15. The first combined operating mode, which involves the generator 700 and the battery 110, may for example correspond to one of the following operating modes according to IEC 62864-1: supplementary charging during motoring (I), boosting (III) and power source charging energy storage system (VI). In the first combined operating mode, all four switches 134, 708, 710, 712 are switched into the second closed state. Also, the interrupter 135 is switched into the closed state. Current flows are indicated by arrows. Power flow may be bidirectional.

For example, the converters 114, 116 may be controlled in such a way that the generator 700 and the battery 110 feed the DC link 112, as shown in Fig. 12 and Fig. 13.

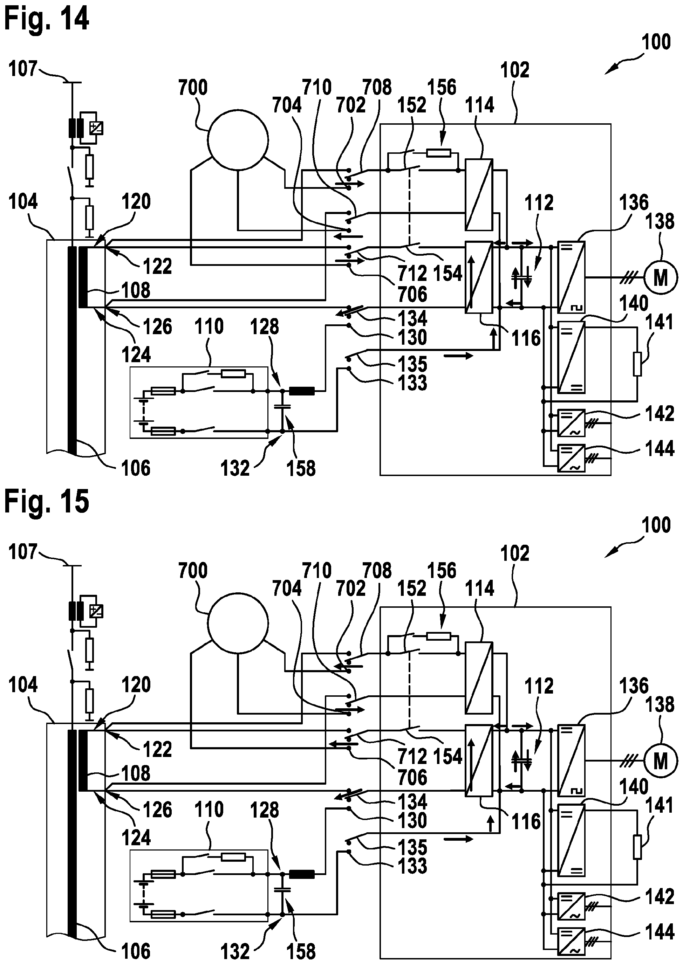

Alternatively, the converters 114, 116 may be controlled in such a way that the generator 700 feeds the DC link 112 and the DC link 112 feeds the battery 110, as shown in Fig. 14 and Fig. 15.

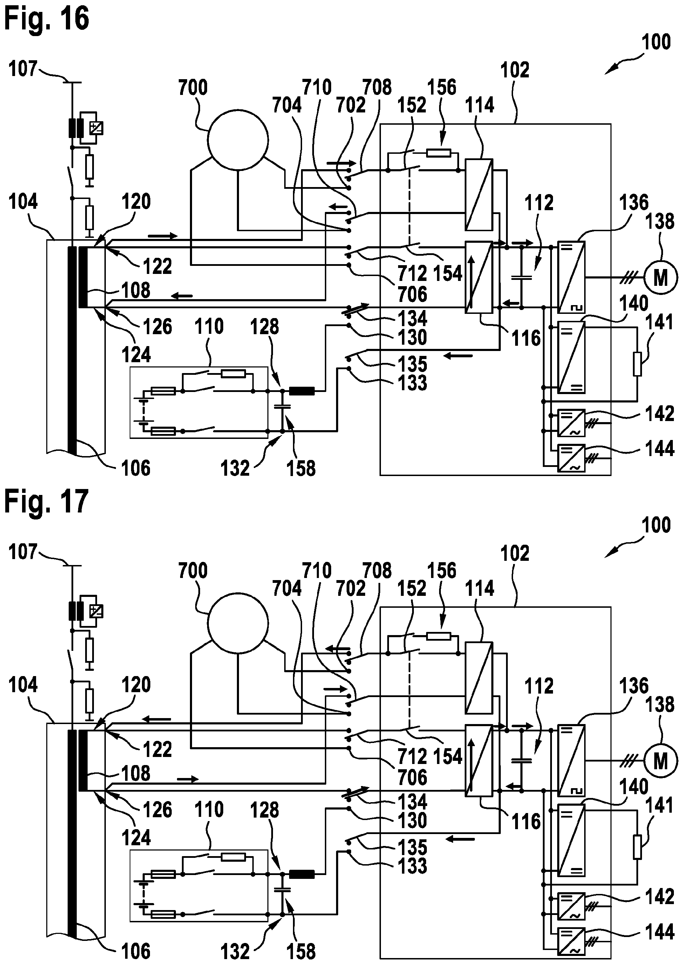

An example for a second combined operating mode of the power supply system 102 is shown in Fig. 16 to Fig. 19. The second combined operating mode, which involves the transformer 104 and the battery 110, may for example correspond to one of the following operating modes according to IEC 62864-1: supplementary charging during motoring (I), boosting (III), power source charging energy storage system (VI), energy storage system to grid (VII). In the second combined operating mode, the switch 134 is switched into the second closed state, whereas each of the three switches 708, 710, 712 is switched into the first closed state. Also, the interrupter 135 is switched into the closed state.

For example, the converters 114, 116 may be controlled in such a way that the transformer 104, i.e. the contact line 107, and the battery 110 feed the DC link 112, as shown in Fig. 16 and Fig. 17.

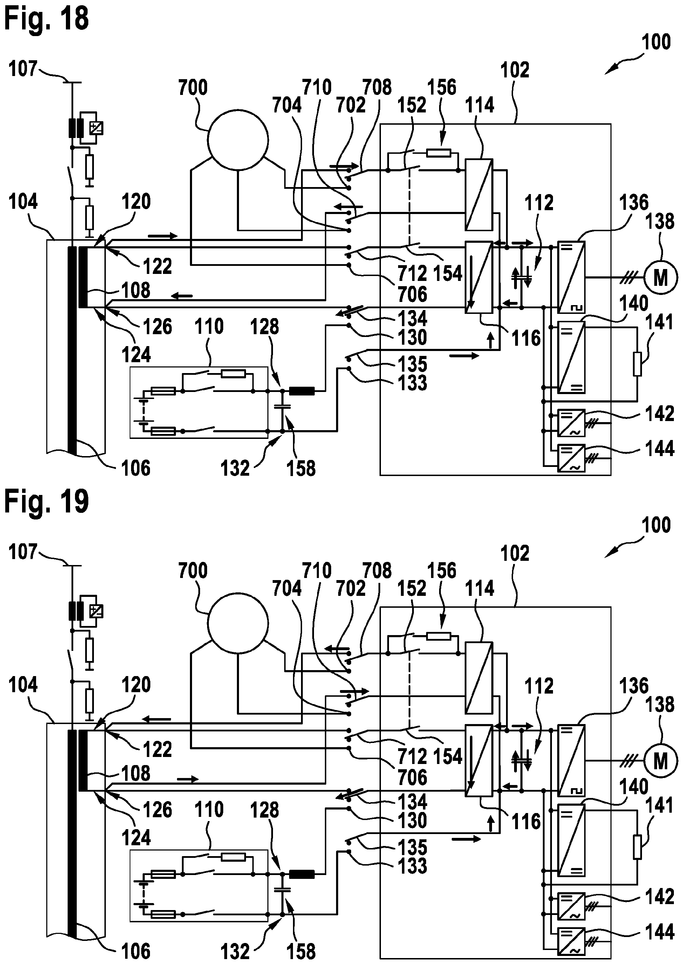

Alternatively, the converters 114, 116 may be controlled in such a way that the transformer 104, i.e. the contact line 107, feeds the DC link 112 and the DC link 112 feeds the battery 110, as shown in Fig. 18 and Fig. 19.

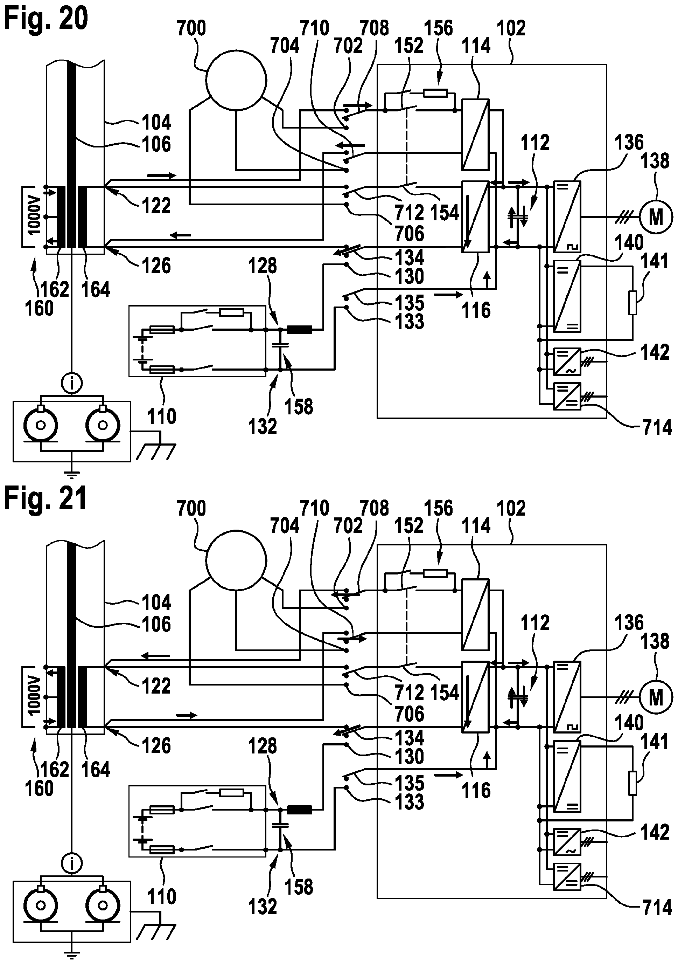

For charging the battery 110 from the further power supply 160, e.g. a 1000 V shop supply, when the traction unit 100 is out of operation, an additional battery operating mode may be realized with the further power supply system 102. This is shown in Fig. 20 and Fig. 21.

The 1000 V shop supply may be connected to a dedicated winding or tap on the primary side of the transformer 104, i.e. the further primary coil 162. The additional battery operating mode may require an additional filtering element at the 1000 V shop supply side. The induced voltage on the traction winding, i.e. the further secondary coil 164, is rectified with the first converter 114, wherein the battery 110 is charged with the second converter 116 from the DC link 112. Current flows are indicated by arrows.

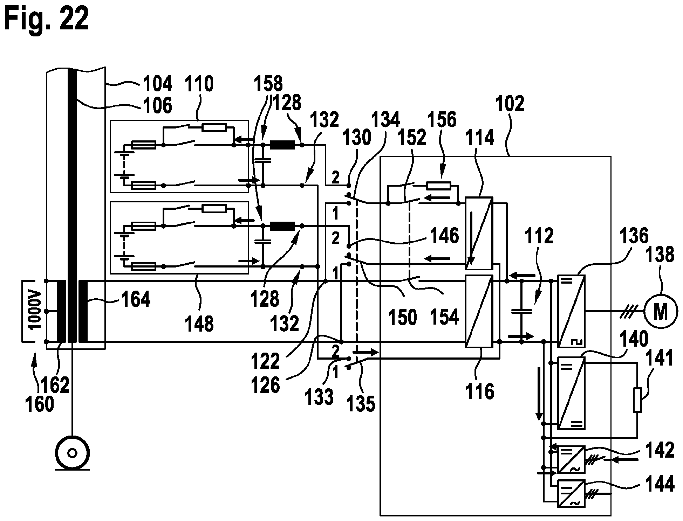

It is also possible that the batteries 110, 148 are fed with the first converter 114 from the auxiliary converter 142 for an intermittent time, as shown in Fig. 22.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 100: traction unit
- 102: power supply system
- 104: transformer
- 106: primary coil
- 107: contact line
- 108: secondary coil
- 110: battery
- 112: DClink
- 114: first converter
- 116: second converter
- 120: first pole of the secondary coil
- 122: first transformer terminal
- 124: second pole of the secondary coil
- 126: second transformer terminal
- 128: first battery pole
- 130: first battery terminal
- 132: second battery pole
- 133: second battery terminal
- 134: switch
- 135: interrupter
- 136: motor converter
- 138: motor
- 140: braking chopper
- 141: braking resistor
- 142: first auxiliary converter
- 144: second auxiliary converter
- 146: further terminal
- 148: further battery
- 150: further switch
- 152: first main switch
- 154: second main switch
- 156: pre-charge unit
- 158: LC filter
- 160: further power supply
- 162: further primary coil
- 164: further secondary coil
- 166: control unit
- 168: operating information
- 200: first half bridge
- 202: second half bridge
- 204: power switch
- 206: diode
- 208: midpoint
- 700: generator
- 702: first terminal
- 704: second terminal
- 706: third terminal
- 708: first switch
- 710: second switch
- 712: third switch
- 714: further chopper

## Claims

1. A power supply system (102) for a traction unit (100), the traction unit (100) having a transformer (104) for providing a transformer AC voltage from an electrical grid (107, 160) and a battery (110) for providing a battery DC voltage, the power supply system (102) comprising:
a DC link (112) for providing a DC link voltage;
a first converter (114) and a second converter (116) for converting at least one of the transformer AC voltage and the battery DC voltage into the DC link voltage, wherein each of the first converter (114) and the second converter (116) comprises at least two half bridges (200, 202) and wherein each of the half bridges (200, 202) is connected in parallel to the DC link (112);
a first transformer terminal (122) and a second transformer terminal (126) for connecting each pole (120, 124) of a secondary coil (108) of the transformer (104) to a midpoint (208) of at least one of the half bridges (200, 202);
a first battery terminal (130) for connecting a first pole (158) of the battery (110) to a midpoint (208) of at least one of the half bridges (200, 202);
a second battery terminal (133) for connecting a second pole (132) of the battery (110) to the DC link (112);
a switch (134) switchable between a first closed state and a second closed state, wherein the switch (134) connects a midpoint (208) of one of the half bridges (200, 202) either to one of the first transformer terminal (122) and the second transformer terminal (126) in the first closed state or to the first battery terminal (130) in the second closed state.

2. The power supply system (102) of claim 1,
wherein the switch (134) is further switchable into a stable open state.

3. The power supply system (102) of one of the previous claims, further comprising:
at least one further terminal (146; 702, 704, 706) for connecting a pole (128) of a further electrical energy source (148; 700) to a midpoint (208) of at least one of the half bridges (200, 202);
at least one further switch (150; 708, 710, 712) switchable between a first closed state and a second closed state, wherein the at least one further switch (150; 708, 710, 712) connects a midpoint (208) of another of the half bridges (200, 202) either to one of the first transformer terminal (122) and the second transformer terminal (126) in the first closed state or to the at least one further terminal (146; 702, 704, 706) in the second closed state.

4. The power supply system (102) of claim 3,
wherein the switch (134) connects a midpoint (208) of a first half bridge (200) of the first converter (114) to the first transformer terminal (122) in the first closed state;
wherein the at least one further switch (150; 708, 710, 712) connects a midpoint (208) of a second half bridge (202) of the first converter (114) to the second transformer terminal (126) in the first closed state;
wherein at least one of the first transformer terminal (122) and the second transformer terminal (126) is further connected to a midpoint (208) of one of the half bridges (200, 202) of the second converter (116).

5. The power supply system (102) of one of claims 1 to 3, further comprising:
a first terminal (702), a second terminal (704) and a third terminal (706) for connecting poles (128) of at least one further electrical energy source (148; 700) to a midpoint (208) of at least one of the half bridges (200, 202);
a first switch (708), a second switch (710), a third switch (712) and a forth switch (134), each of which being switchable between a first closed state and a second closed state;
wherein the first switch (708) connects a midpoint (208) of a first half bridge (200) of the first converter (114) either to the first transformer terminal (122) in the first closed state or to the first terminal (702) in the second closed state;
wherein the second switch (710) connects a midpoint (208) of a second half bridge (202) of the first converter (114) either to the second transformer terminal (126) in the first closed state or to the second terminal (704) in the second closed state;
wherein the third switch (712) connects a midpoint (208) of a first half bridge (200) of the second converter (116) either to the first transformer terminal (122) in the first closed state or to the third terminal (706) in the second closed state;
wherein the forth switch (134) connects a midpoint (208) of a second half bridge (202) of the second converter (116) either to the second transformer terminal (126) in the first closed state or to the first battery terminal (130) in the second closed state.

6. The power supply system (102) of one of the previous claims,
wherein at least one of the first transformer terminal (122) and the second transformer terminal (126) is connectable with one switch (708, 710) to a midpoint (208) of one of the half bridges (200, 202) of the first converter (114) and with another switch (134; 712) to a midpoint (208) of one of the half bridges (200, 202) of the second converter (116).

7. The power supply system (102) of one of the previous claims, further comprising:
an interrupter (135) for disconnecting the DC link (112) from the second battery terminal (133).

8. A method for operating a power supply system (102) for a traction unit (100), the traction unit (100) having a transformer (104) for providing a transformer AC voltage from an electrical grid (107, 160) and a battery (110) for providing a battery DC voltage, the power supply system (102) comprising:
a DC link (112) for providing a DC link voltage;
a first converter (114) and a second converter (116) for converting at least one of the transformer AC voltage and the battery DC voltage into the DC link voltage, wherein each of the first converter (114) and the second converter (116) comprises at least two half bridges (200, 202) and wherein each of the half bridges (200, 202) is connected in parallel to the DC link (112);
a first transformer terminal (122) and a second transformer terminal (126), each of which connected to a pole (120, 124) of a secondary coil (108) of the transformer (104);
a first battery terminal (130) connected to a first pole (128) of the battery (110);
a second battery terminal (133) connecting a second pole (132) of the battery (110) to the DC link (112);
a switch (134) switchable between a first closed state and a second closed state, wherein the switch (134) connects a midpoint (208) of one of the half bridges (200, 202) either to one of the first transformer terminal (122) and the second transformer terminal (126) in the first closed state or to the first battery terminal (130) in the second closed state;
the method comprising:
receiving, at a control unit (166) of the power supply system (102), an operating information (168) indicating an operating mode of the power supply system (102);
when the operating information (168) indicates a transformer operating mode: switching the switch (134) into the first closed state and controlling a current flow between the transformer (104) and the DC link (112) with at least one of the first converter (114) and the second converter (116);
when the operating information (168) indicates a battery operating mode: switching the switch (134) into the second closed state and controlling a current flow between the battery (110) and the DC link (112) with at least one of the first converter (114) and the second converter (116).

9. The method of claim 8, the power supply system (102) further comprising:
at least one further terminal (146; 702, 704, 706) connected to a pole (128) of a further electrical energy source (148; 700);
at least one further switch (150; 708, 710, 712) switchable between a first closed state and a second closed state, wherein the at least one further switch (150; 708, 710, 712) connects a midpoint (208) of another of the half bridges (200, 202) either to one of the first transformer terminal (122) and the second transformer terminal (126) in the first closed state or to the at least one further terminal (146; 702, 704, 706) in the second closed state;
wherein the method further comprises:
when the operating information (168) indicates an operating mode including at least the further electrical energy source (148; 700): switching the at least one further switch (150; 708, 710, 712) into the second closed state and controlling a current flow between the further electrical energy source (148; 700) and the DC link (112) with at least one of the first converter (114) and the second converter (116);
when the operating information (168) indicates an operating mode excluding the further electrical energy source (148; 700): switching the at least one further switch (150; 708, 710, 712) either into the first closed state or into an open state.

10. The method of claim 9, further comprising:
when the operating information (168) indicates an operating mode including only the further electrical energy source (148; 700): switching the switch (134) into an open state, switching the at least one further switch (150; 708, 710, 712) into the second closed state and controlling a current flow between the further electrical energy source (148; 700) and the DC link (112) with at least one of the first converter (114) and the second converter (116).

11. The method of claim 9 or 10, further comprising:
when the operating information (168) indicates an operating mode including the transformer (104) and the battery (110): switching the switch (134) into the second closed state, switching the at least one further switch (708, 710, 712) into the first closed state and controlling a current flow between the transformer (104) and the DC link (112) and a current flow between the battery (110) and the DC link (112) with at least one of the first converter (114) and the second converter (116).

12. The method of one of claims 9 to 11, further comprising:
when the operating information (168) indicates an operating mode including the further electrical energy source (148; 700) and the battery (110): switching the switch (134) and the at least one further switch (150; 708, 710, 712) into the second closed state and controlling a current flow between the further electrical energy source (148; 700) and the DC link (112) and a current flow between the battery (110) and the DC link (112) with at least one of the first converter (114) and the second converter (116).

13. The method of one of claims 9 to 12, further comprising:
when the operating information (168) indicates the transformer operating mode: switching the switch (134) and the at least one further switch (150; 708, 710, 712) into the first closed state and controlling a current flow between the transformer (104) and the DC link (112) with at least one of the first converter (114) and the second converter (116).

14. The method of one of claims 9 to 13, further comprising:
when the operating information (168) indicates the battery operating mode: switching the switch (134) into the second closed state, switching the at least one further switch (150; 708, 710, 712) either into the second closed state when the further electrical energy source (148; 700) is a further battery (148) or into an open state when the further electrical energy source (148; 700) is a generator (700) and controlling a current flow between the DC link (112) and at least one of the battery (110) and the further battery (148) with at least one of the first converter (114) and the second converter (116).

15. The method of one of claims 8 to 14,
wherein the current flow between the battery (110) and the DC link (112) is controlled in such a way that the battery (110) draws power from the DC link (112); and/or
wherein the current flow between the further electrical energy source (148) and the DC link (112) is controlled in such a way that the further electrical energy source (148) draws power from the DC link (112).
